(19) **Europäisches Patentamt European Patent Office Office européen des brevets**

(11) **EP 4 384 854 B1**

(12) **FASCICULE DE BREVET EUROPEEN**

(45) Date de publication et mention de la délivrance du brevet:
**23.07.2025   Bulletin 2025/30**

(21) Numéro de dépôt: **22760984.9**

(22) Date de dépôt: **04.08.2022**

(51) Classification Internationale des Brevets (IPC):
**G01T 1/36** *(2006.01)*     **G01T 1/169** *(2006.01)*

(52) Classification Coopérative des Brevets (CPC):
**G01T 1/36; G01T 1/169**

(86) Numéro de dépôt international:
**PCT/EP2022/072012**

(87) Numéro de publication internationale:
**WO 2023/016929 (16.02.2023 Gazette 2023/07)**

(54) **PROCÉDÉ DE TRAITEMENT BAYÉSIEN D'UN SPECTRE**

VERFAHREN ZUR BAYES-BEHANDLUNG EINES SPEKTRUMS

METHOD FOR BAYESIAN TREATMENT OF A SPECTRUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **11.08.2021   FR 2108627**

(43) Date de publication de la demande:
**19.06.2024   Bulletin 2024/25**

(73) Titulaire: **Commissariat à l'Energie Atomique et aux Energies Alternatives**
**75015 Paris (FR)**

(72) Inventeurs:
• **HANAN, Arahmane-Ben Maissa**
**91190 GIF-SUR-YVETTTE (FR)**
• **DUMAZERT, Jonathan**
**91190 GIF-SUR-YVETTTE (FR)**
• **BARAT, Eric**
**91190 GIF-SUR-YVETTTE (FR)**
• **DAUTREMER, Thomas**
**91190 GIF-SUR-YVETTTE (FR)**

(74) Mandataire: **INNOV-GROUP**
**209 Avenue Berthelot**
**69007 Lyon (FR)**

(56) Documents cités:
**FR-A1- 3 034 221**

• **ARAHMANE HANAN ET AL: "A Reliable Absolute and Relative Bayesian Method for Nuclear Decommissioning: Low-Level Radioactivity Detection With Gamma-Ray Spectrometry", IEEE TRANSACTIONS ON INSTRUMENTATION AND MEASUREMENT, IEEE, USA, vol. 70, 23 March 2021 (2021-03-23), pages 1 - 18, XP011848126, ISSN: 0018-9456, [retrieved on 20210405], DOI: 10.1109/TIM.2021.3065419**
• **GULAM RAZUL S ET AL: "Bayesian model selection and parameter estimation of nuclear emission spectra using RJMCMC", NUCLEAR INSTRUMENTS & METHODS IN PHYSICS RESEARCH. SECTION A, ELSEVIER BV * NORTH-HOLLAND, NL, vol. 497, no. 2-3, 1 February 2003 (2003-02-01), pages 492 - 510, XP004404750, ISSN: 0168-9002, DOI: 10.1016/ S0168-9002(02)01807-7**

**Description**

## DOMAINE TECHNIQUE

Le domaine technique de l'invention est le traitement bayésien de spectres d'énergies de rayonnements ionisants.

## ART ANTERIEUR

La spectrométrie gamma est une technique de référence dans le contrôle d'objets, de déchets, ou d'autres types ou de matériaux issus de l'industrie nucléaire.

Elle est également couramment utilisée pour le contrôle de structures, par exemple des parois d'installations nucléaires en cours de déclassement, ou pour le contrôle environnemental, par exemple le contrôle de sols potentiellement contaminés. Il s'agit de vérifier la conformité de l'état radiologique vis-à-vis d'objectifs en matière d'activité radiologique résiduelle. Une contrainte de ce type d'application est qu'il faut disposer d'une limite de détection faible dans une durée de mesure raisonnable, de façon à être compatible avec des cadences de mesure industrielles. Une autre contrainte est que les mesures étant effectuées in-situ, le bruit de fond peut fluctuer d'un endroit à un autre. De plus, les structures elles même peuvent comporter des matériaux comportant une activité radiologique naturelle significative et fluctuante, notamment lorsqu'il s'agit de terres ou du béton.

La publication [1] Arahmane et al « A reliable absolute and relative Bayesian method for nuclear decommissioning : low level radioactivity detection with gamma-ray spectrometry » IEEE Transactions on Instrumentation and Measurement, vol. 70, pp. 1-18, 2021, décrit le recours à des tests statistiques bayésiens pour traiter des spectres de parois de béton susceptibles de présenter une faible activité résiduelle d'Uranium. De façon usuelle dans les tests bayésiens, il est nécessaire de disposer d'une connaissance préalable d'un spectre représentatif du bruit de fond, ou spectre de bruit de fond a priori, ainsi que d'un spectre isotopique a priori, représentatif de la signature spectrale des isotopes d'Uranium susceptibles d'être présents, en particulier $^{235}U$ et certains descendants de $^{238}U$.

Dans cette publication, les tests statistiques sont pratiqués en formant l'hypothèse qu'un spectre mesuré sur le terrain comporte un spectre de bruit de fond mesuré éventuellement additionné d'un spectre isotopique mesuré. Le spectre de bruit de fond mesuré correspond à une composante du spectre mesuré, due au bruit de fond. De façon analogue, le spectre

isotopique mesuré correspond à une composante du spectre mesuré, due à l'activité résiduelle d'Uranium. Le spectre de bruit de fond mesuré et le spectre isotopique mesuré résultent chacun de lois multinomiales, dont les paramètres suivent une loi de Dirichlet, dont l'espérance est définie respectivement à partir du spectre de bruit de fond a priori et du spectre isotopique a priori.

L'objectif des tests bayésiens est de déterminer les probabilités a postériori selon lesquelles l'échantillon se trouve dans un état de référence, correspondant à l'absence de contamination, et un état hors référence, correspondant à la présence d'une contamination résiduelle. On peut ainsi déterminer l'hypothèse la plus probable quant à l'état de l'échantillon.

La performance de prédiction de ce type de test peut être évaluée en quantifiant un taux de détection vraie (TDV), ou vrais positifs, ainsi qu'un taux de fausses alarmes (TFA), ou faux positifs.

La publication précitée décrit deux types de tests bayésiens. L'objet de l'invention est de proposer un autre test bayésien, pouvant être aisément ajusté en fonction des conditions opérationnelles rencontrées sur le terrain, en particulier en ce qui concerne la stationnarité du bruit de fond. Il s'agit de pouvoir prendre en compte une variabilité du bruit de fond par rapport au bruit de fond tel que défini dans le spectre de bruit de fond a priori.

## EXPOSE DE L'INVENTION

Un premier objet de l'invention est un procédé de caractérisation d'un échantillon irradiant, visant à classer l'échantillon dans un état choisi parmi :

- un état de référence, dans lequel l'échantillon présente une composition de référence ;
- un état hors référence, dans lequel l'échantillon comporte un, ou au moins un, isotope irradiant s'ajoutant à la composition de référence;

le procédé comportant les étapes suivantes :

a) durant une période de mesure, à l'aide d'un détecteur, mesure d'un rayonnement X ou gamma émis par l'échantillon et obtention d'un spectre de l'échantillon, défini dans différents canaux d'énergie, correspondant à un spectre du rayonnement détecté par le détecteur, le spectre de l'échantillon :

- comportant un spectre de bruit de fond mesuré, correspondant à une composante, dans le spectre de l'échantillon, d'un fond radiologique représentatif de l'état de référence de l'échantillon ;
- pouvant comporter un spectre isotopique, correspondant à une composante, dans le spectre de l'échantillon, due à la présence éventuelle de l'isotope dans l'échantillon ;

b) prise en compte

- d'un spectre du bruit de fond a priori,
- d'un spectre isotopique a priori;

c) modélisation d'un spectre de référence, représentatif du spectre détecté par le détecteur lorsque l'échantillon est dans la configuration de référence, le spectre de référence étant établi à partir du bruit de fond a priori, et plus précisément à partir d'une distribution centrée sur le spectre de bruit de fond a priori, en prenant en compte une intensité de référence du bruit de fond;

d) modélisation du spectre du bruit de fond mesuré dans le spectre de l'échantillon, à partir du spectre de bruit de fond a priori, et plus précisément à partir d'une distribution centrée sur le spectre de bruit de fond a priori, en prenant en compte une intensité du bruit de fond mesuré;

e) modélisation du spectre isotopique mesuré, à partir du spectre isotopique a priori, et plus précisément à partir d'une distribution centrée sur le spectre isotopique a priori, en prenant en compte une intensité d'émission de l'isotope dans l'échantillon;

f) à partir du spectre de l'échantillon, mesuré lors de l'étape a), et des modélisations résultant des étapes c), d) et e), réalisation d'un test bayésien de façon à estimer :

- une probabilité de l'état de référence de l'échantillon;
- et/ou une probabilité de l'état hors référence de l'échantillon ;

le procédé étant caractérisé en ce que l'intensité du bruit de fond mesuré et l'intensité de référence sont distribuées selon une loi bivariée.

Les étapes b) à f) sont mises en œuvre par ordinateur à partir du spectre de l'échantillon résultant de l'étape a).

De préférence, la loi bivariée est une loi gamma bivariée de Kibble, paramétrée par :

- un premier paramètre;
- un deuxième paramètre;
- un coefficient de corrélation, traduisant une corrélation a priori entre l'intensité de référence et l'intensité du bruit de fond mesuré.

Le coefficient de corrélation est de préférence réglable par un utilisateur.

De préférence,

- le premier paramètre est compris entre 0.4 et 0.6 ;
- le deuxième paramètre est l'inverse de deux fois une intensité moyenne du bruit de fond a priori.

Le procédé peut être tel que :

- lors de l'étape c), la valeur de chaque canal d'énergie du spectre de référence suit une loi de Poisson de paramètre $\lambda_{b\text{-}ref}x_b(k)$, où :

  - $\lambda_{b\text{-}ref}$ est l'intensité de référence;
  - $k$ est un rang assigné à chaque canal d'énergie ;
  - $\boldsymbol{x_b}$ est un vecteur, défini sur chaque canal d'énergie, à partir de la distribution centrée sur le spectre du bruit de fond a priori ;

- lors de l'étape d), la valeur de chaque canal d'énergie du spectre de bruit de fond mesuré suit une loi de Poisson de paramètre $\lambda_{b\text{-}test}x_b(k)$, où :

- $\lambda_{b\text{-}test}$ est l'intensité du bruit de fond mesuré ;
- $\boldsymbol{x_b}$ est le vecteur défini sur chaque canal d'énergie, à partir de la distribution centrée sur le spectre du bruit de fond a priori, pris en compte pour modéliser le spectre de référence ;

- lors de l'étape e),la valeur de chaque canal d'énergie du spectre isotopique mesuré suit une loi de Poisson de paramètre $\lambda_s x_s(k)$, où :

- $\lambda_s$ est l'intensité d'émission de l'isotope ;
- $\boldsymbol{x_s}$ est un vecteur défini sur chaque canal d'énergie, à partir de la distribution centrée sur le spectre isotopique a priori.

Selon un mode de réalisation, le procédé est tel que :

- le vecteur $\boldsymbol{x_b}$ suit une loi de Dirichlet dont le vecteur de paramètres est défini à partir du bruit de fond a priori ;
- le vecteur $\boldsymbol{x_s}$ suit une loi de Dirichlet dont le vecteur de paramètres est défini à partir du spectre isotopique a priori.

Selon un mode de réalisation, le procédé est tel que :
le vecteur $\boldsymbol{x_b}$ est distribué selon un arbre de Polya, dont le vecteur de paramètres est défini à partir du bruit de fond a priori;

- le vecteur $\boldsymbol{x_s}$ est distribué selon un arbre de Polya, dont le vecteur de paramètres est défini à partir du spectre isotopique a priori.

Le procédé peut être tel que :

- l'échantillon est un objet potentiellement contaminé par l'isotope ;
- l'état de référence correspond à une absence de contamination de l'échantillon par l'isotope ;
- l'état hors référence correspond une présence de l'isotope dans l'échantillon.

Le procédé peut être tel que :

- l'échantillon est un déchet ou un matériau nucléaire ;
- l'état de référence correspond à un état radiologique considéré comme normal de l'objet ;
- l'état hors référence correspond à une présence de l'isotope dans l'échantillon au-delà ou en deçà d'un seuil.

Un deuxième objet de l'invention est un dispositif d'analyse spectrométrique d'un échantillon, comportant :

- un détecteur, configuré pour détecter un rayonnement X ou gamma émis par l'échantillon ;
- un circuit de spectrométrie, configuré pour générer un spectre en énergie du rayonnement détecté par le détecteur ;
- une unité de traitement, programmée pour mettre en œuvre les étapes b) à f) d'un procédé selon le premier objet de l'invention, à partir du spectre en énergie du rayonnement détecté par le détecteur.

L'invention sera mieux comprise à la lecture de l'exposé des exemples de réalisation présentés, dans la suite de la description, en lien avec les figures listées ci-dessous.

## FIGURES

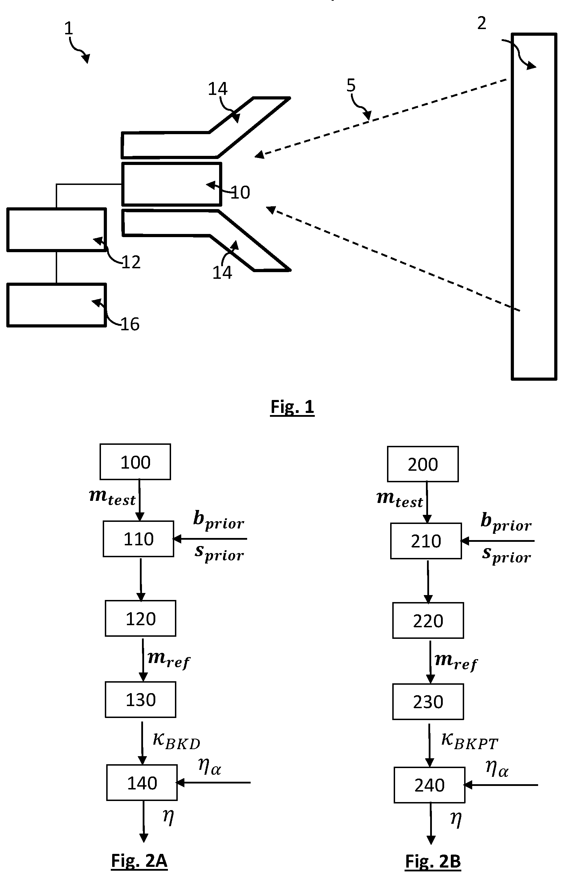

La figure 1 schématise les principaux composants d'un dispositif permettant une mise en œuvre de l'invention.
Les figures 2A et 2B représentent les principales étapes respectivement d'un premier mode de réalisation et d'un deuxième mode de réalisation.

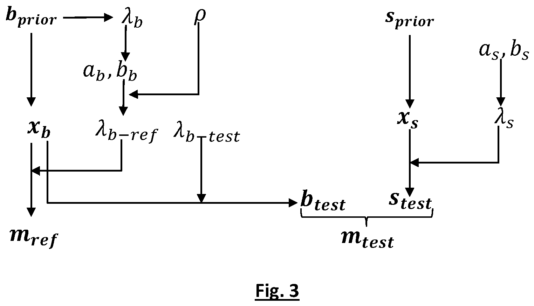

La figure 3 illustre une dépendance entre différentes grandeurs utilisées dans le premier mode de réalisation et dans le deuxième mode de réalisation.

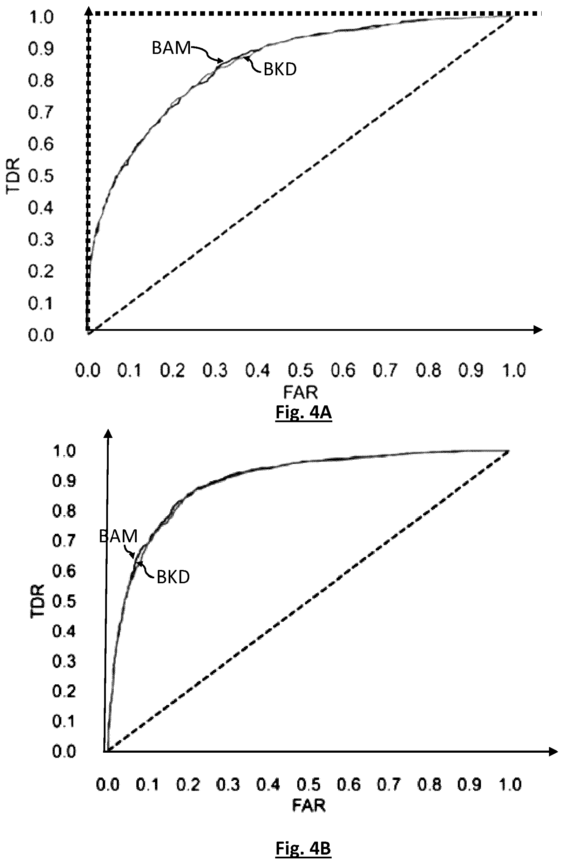

Les figures 4A et 4B illustrent des performances modélisées du test selon le premier mode de réalisation, en présence d'un bruit de fond stationnaire, et en supposant une corrélation élevée entre les intensités de référence du bruit de fond et du bruit de fond dans le spectre mesuré. L'échantillon modélisé était une paroi comportant de l'Uranium naturel. Les temps de comptage des spectres permettant l'établissement des figures 4A et 4B étaient respectivement de 3000 secondes et 5000 secondes.

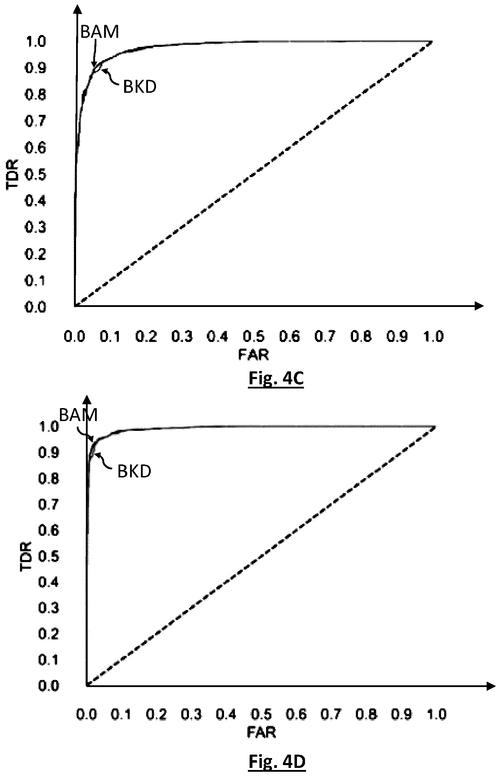

Les figures 4C et 4D illustrent des performances modélisées du test selon le premier mode de réalisation, en présence d'un bruit de fond stationnaire, en supposant une corrélation élevée entre les intensités du bruit de fond de référence et dans le spectre mesuré. L'échantillon modélisé était une paroi comportant de l'Uranium légèrement enrichi (isotopie de 3% d'$^{235}$U). Les temps de comptage des spectres modélisés permettant l'établissement des figures 4C et 4D étaient respectivement de 3000 secondes et 5000 secondes.

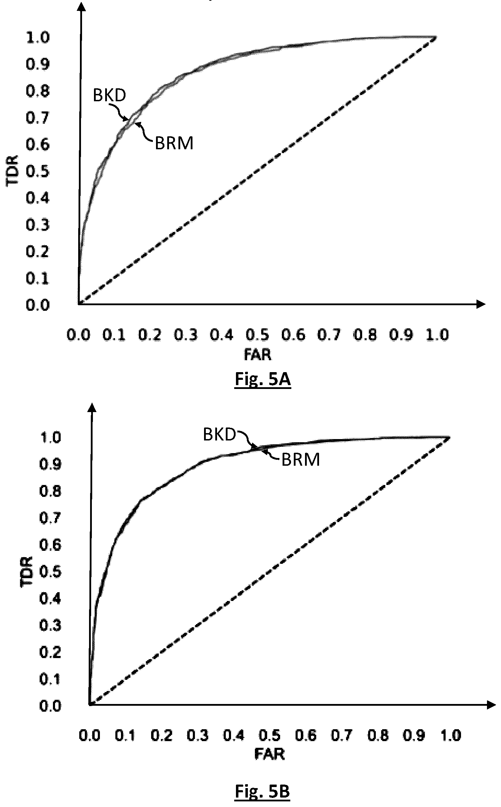

Les figures 5A et 5B illustrent des performances modélisées du test selon le premier mode de réalisation, en présence d'un bruit de fond stationnaire, en supposant une corrélation faible entre les intensités du bruit de fond de référence et dans le spectre mesuré. L'échantillon modélisé était une paroi comportant de l'Uranium naturel. Les temps de comptage des spectres permettant l'établissement des figures 5A et 5B étaient respectivement de 3000 secondes et 5000 secondes.

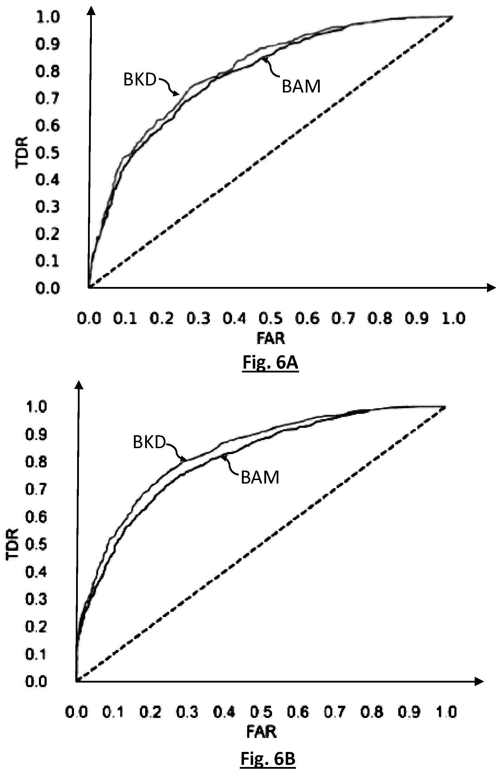

Les figures 6A et 6B illustrent des performances modélisées du test selon le premier mode de réalisation, en présence d'un bruit de fond non stationnaire, en supposant une corrélation élevée entre les intensités du bruit de fond de référence et dans le spectre mesuré. L'échantillon modélisé était une paroi comportant de l'Uranium naturel. Les temps de comptage des spectres permettant l'établissement des figures 6A et 6B étaient respectivement de 3000 secondes et 5000 secondes.

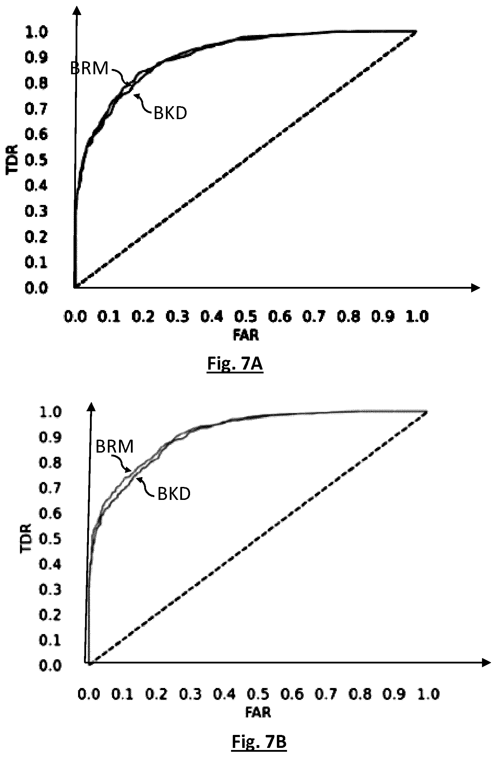

Les figures 7A et 7B illustrent des performances modélisées du test selon le premier mode de réalisation, en présence d'un bruit de fond non stationnaire, en supposant une corrélation faible entre les intensités du bruit de fond de référence et dans le spectre mesuré. L'échantillon était une paroi comportant de l'Uranium légèrement enrichi (isotopie de 3% d'$^{235}$U). Les temps de comptage des spectres permettant l'établissement des figures 7A et 7B étaient respectivement de 3000 secondes et 5000 secondes.

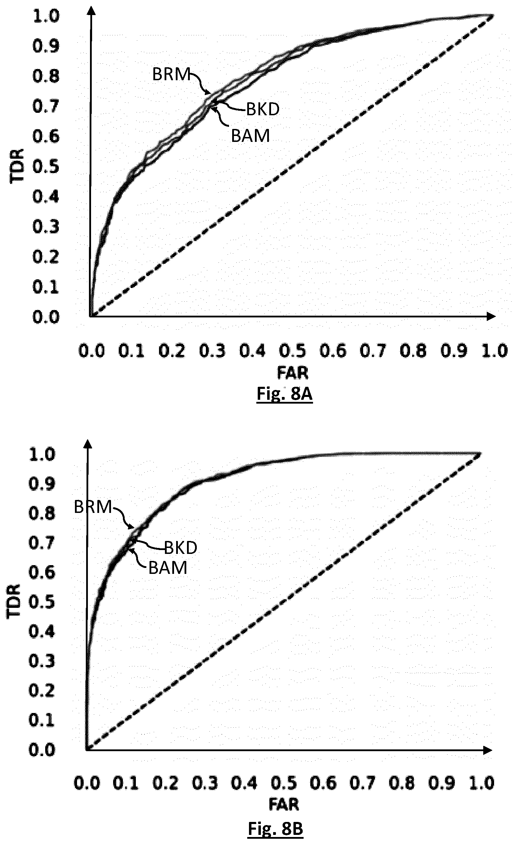

Les figures 8A et 8B illustrent des performances du test selon le premier mode de réalisation, en présence d'un bruit de fond non stationnaire, en supposant une corrélation intermédiaire entre les intensités du bruit de fond de référence et dans le spectre mesuré. L'échantillon était une paroi comportant de l'Uranium respectivement à l'isotopie naturelle (figure 8A) et légèrement enrichi (isotopie de 3% d'$^{235}$U -figure 8B). Dans les deux cas, les temps de comptage des spectres étaient de 3000 secondes.

## EXPOSE DE MODES DE REALISATION PARTICULIERS

La figure 1 représente un exemple de dispositif permettant une mise en œuvre de l'invention.

Le dispositif comporte un détecteur 10, apte à interagir avec un rayonnement électromagnétique ionisant 5 émis par un échantillon 2. L'échantillon est susceptible de contenir un isotope radioactif, émettant une partie du rayonnement ionisant 5. L'échantillon peut être un déchet nucléaire, un objet destiné à être utilisé dans une installation nucléaire, ou un élément structurel d'une installation nucléaire. L'échantillon peut également être un sol susceptible d'être contaminé.

Par rayonnement électromagnétique ionisant, on entend un rayonnement photonique de type X ou gamma. Dans l'exemple décrit, le rayonnement est un rayonnement gamma, formé de photons dont l'énergie est par exemple comprise entre quelques keV et 2 MeV.

Dans cet exemple, l'échantillon 2 est une paroi dont on souhaite déterminer l'état radiologique à des fins de contrôle de déclassement. La paroi est susceptible de présenter une activité radiologique résiduelle due à la présence d'au moins un isotope émetteur gamma. L'objectif de la mesure est de déterminer si la paroi est dans un état de référence, considéré comme non contaminé, ou dans un état hors référence, présentant une contamination résiduelle.

Lorsqu'un photon gamma interagit dans le détecteur 10, ce dernier génère une impulsion dont l'amplitude dépend, de préférence linéairement, de l'énergie libérée par le photon au cours de son interaction dans le détecteur. Le détecteur 10 est relié à un circuit électronique de spectrométrie 12. Durant une période de mesure, pouvant durer quelques secondes à quelques minutes ou dizaines de minutes, les impulsions générées par le détecteur 10 sont dénombrées et classées en fonction de leur amplitude, de façon à former un spectre d'amplitude. En utilisant une fonction d'étalonnage en énergie, établissant une relation entre l'amplitude de l'impulsion et l'énergie libérée dans le détecteur, on obtient un spectre en énergie. D'une façon générale, le spectre en énergie est discrétisé en différents canaux d'énergie $k$, le nombre $K$ de canaux étant généralement compris entre plusieurs centaines et plusieurs milliers.

Ainsi, le dispositif 1 permet de former un spectre en énergie des photons émis par la paroi 2. Lorsqu'un isotope émetteur gamma est présent dans ou sur la paroi, selon une quantité détectable, il produit, dans le spectre mesuré, une signature spectrale comportant un ou plusieurs pics dont l'énergie est connue. L'énergie de chaque pic correspond à l'énergie des photons émis par l'isotope. Les énergies d'émission des principaux isotopes sont connues et disponibles dans des bases de données.

Dans l'exemple représenté, le détecteur est un détecteur comportant un cristal de germanium refroidi, ce type de détecteur permettant d'effectuer des mesures par spectrométrie présentant une résolution en énergie optimale. Il pourrait également s'agir d'un autre matériau semiconducteur communément mis en œuvre pour la détection de rayonnements ionisants, par exemple de type Si, CdZnTe. D'autres types de détecteurs sont utilisables, par exemple des scintillateurs couplés à un convertisseur photons/porteurs de charge.

Le spectre mesuré comporte une composante de bruit de fond, qui correspond au fond radiologique auquel est exposé le détecteur 10. Le bruit de fond peut avoir plusieurs origines. Il peut s'agir d'un bruit de fond naturel, dû à la radioactivité naturelle présente dans l'installation. Lorsque la paroi est une paroi comportant des matériaux naturellement radioactifs, de type terre, gravats, béton, le bruit de fond naturel provient d'isotopes radioactifs, émetteurs gamma, naturellement présents dans ces matériaux. Un émetteur gamma naturel usuellement rencontré est $^{40}$K. Le bruit de fond peut également être induit par le voisinage de la paroi contrôlée. Afin de réduire la contribution du bruit de fond « de voisinage », le détecteur est usuellement entouré par un blindage 14. Le blindage forme un collimateur délimitant un angle d'ouverture de façon à limiter le champ d'observation du détecteur 10. Cependant, le blindage n'agit pas en tout ou rien et certains photons, émis dans le voisinage du détecteur, peuvent traverser le blindage et être détectés par le détecteur.

Une difficulté à laquelle sont confrontées les mesures gamma in-situ concerne la fluctuation du bruit de fond, et cela d'autant pour des mesures de type contrôle de déclassement, dans lesquelles la limite de détection est faible.

Le dispositif comporte une unité de traitement 16, destinée à effectuer un traitement de chaque spectre résultant du circuit de spectrométrie 12, de façon à déterminer la présence ou l'absence de contamination dans la paroi. L'unité de traitement 16 peut par exemple comporter un microprocesseur.

Une difficulté des mesures spectrométriques réalisées in-situ, à des fins de contrôle radiologique résiduel, est que la sensibilité doit être la plus élevée possible, de façon à obtenir un taux de vrais positifs élevé (ou taux de détection vraie), un vrai positif correspondant à un échantillon hors référence et détecté comme tel. Il est également nécessaire que le taux de faux positifs (ou taux de fausse alarme) soit aussi faible que possible, un faux positif correspondant à un échantillon dans l'état de référence et détecté de façon erronée comme hors référence.

Ces impératifs se confrontent avec des contraintes opérationnelles : la durée de chaque mesure doit être raisonnable, de façon à pouvoir contrôler des surfaces importantes, pouvant atteindre plusieurs centaines ou milliers de mètres carrés. Une autre contrainte est la présence d'un bruit de fond dont la contribution, sur le spectre mesuré, est significative et fluctuante en fonction du lieu et de la constitution des parois contrôlées. L'intensité, mais également la forme spectrale du bruit de fond, peuvent varier, ce qui peut rendre l'interprétation de mesures délicate.

L'unité de traitement 16 met en œuvre un procédé de traitement des spectres selon les étapes schématisée sur les figures 2A ou 2B. La figure 3 montre les relations entre les différentes grandeurs mises en œuvre, et cela dans les deux modes de réalisation.

Premier mode de réalisation.

La figure 2A correspond au premier mode de réalisation. L'ordre des étapes apparaissant sur la figure 2A est indicatif.

Etape 100 : acquisition du spectre et transmission à l'unité de traitement 16

Au cours d'une étape 100, l'unité de traitement 16 reçoit un spectre mesuré $m_{test}$ qui est un vecteur de dimension $K$, la valeur de chaque terme $m_{test}(k)$ de $m_{test}$ correspond à la valeur d'un canal d'énergie $E_k$ avec $1 \leq k \leq K$. Le spectre mesuré a été acquis selon une période d'acquisition de durée $T_{test}$.

Le spectre mesuré comporte une composante liée au bruit de fond, dit spectre de bruit de fond mesuré $b_{test}$, et, éventuellement, une composante isotopique $s_{test}$, dit spectre isotopique mesuré, due à l'éventuelle présence de l'isotope dans l'échantillon, en l'occurrence la paroi. Les composantes $b_{test}$ et $s_{test}$ ne sont pas directement dissociables. L'objectif du traitement bayésien décrit ci-après est de déterminer, à partir du spectre mesuré $m_{test}$, une probabilité d'appartenance de l'échantillon à l'état de référence et/ou une probabilité d'appartenance de l'échantillon à l'état hors référence. Cela revient à identifier dans quelle mesure la composante $s_{test}$ est présente dans $m_{test}$.

Etape 110 : définition des a priori

Le procédé suppose une étape 110 de définition d'a priori. On définit un spectre de bruit de fond a priori $b_{prior}$. Le spectre de bruit de fond a priori $b_{prior}$ est supposé être représentatif du bruit de fond auquel est soumis le détecteur lors de l'acquisition du spectre mesuré. Le spectre du bruit de fond a priori $b_{prior}$ peut être établi sur la base d'acquisitions effectuées sur un ou plusieurs échantillons considérés comme représentatifs de l'échantillon analysé, sans activité ajoutée. Le spectre de bruit de fond a priori $b_{prior}$ est défini selon le même nombre de canaux que le spectre mesuré.

Au cours de cette étape, on définit un spectre isotopique a priori $s_{prior}$, qui correspond à une signature spectrale de l'isotope. Le spectre isotopique a priori $s_{prior}$ est établi en prenant en compte un isotope présent dans l'échantillon. Il peut être établi sur la base d'un code de calcul par exemple un code basé sur une méthode de Monte Carlo comme MCNP (Monte Carlo N-Particle), ce qui permet une modélisation de la propagation des photons jusqu'au détecteur, ainsi que les interactions des photons dans le détecteur 10. Afin de tenir compte de la fonction de réponse du détecteur, le spectre résultant de la modélisation peut être confronté à un ou plusieurs spectres expérimentaux, mesurés en présence d'une quantité connue de l'isotope.

Etape 120 : Modélisations

Comme précédemment indiqué, la forme spectrale et l'intensité du bruit de fond sont susceptibles d'évoluer entre le spectre de bruit de fond a priori $b_{prior}$, et le bruit de fond mesuré $b_{test}$, c'est-à-dire la contribution du bruit de fond dans le spectre mesuré $m_{test}$. On introduit un spectre de référence $m_{ref}$, associé à une période d'acquisition de référence $T_{ref}$, à partir du bruit de fond a priori $b_{prior}$. Le spectre de référence $m_{ref}$ est obtenu à partir d'un tirage aléatoire selon une loi multivariée, dont les intensités sont définies par une loi de Dirichlet paramétrée par le bruit de fond a priori $b_{prior}$. Plus précisément, chaque canal $m_{ref}(k)$ du spectre de référence $m_{ref}$ suit une loi de Poisson de paramètre $\lambda_{b-ref}x_b(k)$, où $x_b(k)$ est un canal de rang $k$ obtenu à partir d'un vecteur $x_b$, ce dernier suivant une loi de Dirichlet dont le vecteur de paramètres est $Kv_b b'_{prior}$, où :

- $K$ correspond au nombre de canaux du spectre mesuré (qui est égal au nombre de canaux du spectre de référence) ;
- $v_b$ est un facteur de confiance assigné au bruit de fond a priori $b_{prior}$. $v_b$ est un réel strictement positif qui quantifie un niveau de confiance que l'on attribue au bruit de fond a priori. Lorsque l'utilisateur présente un niveau de confiance élevé à l'égard du bruit de fond a priori, $v_b$ peut être égal à $10^2$. $v_b$ est proche de 1 dans le cas contraire.
- $b'_{prior}$ est un bruit de fond a priori normalisé, obtenu par normalisation du bruit de fond a priori $b_{prior}$. La normalisation est telle que $\sum_{k=1}^{k=K} b'_{prior}(k) = 1$.

$$\text{On pose } \gamma_b = Kv_b b'_{prior}(1).$$

$\lambda_{b-ref}$ correspond à une intensité du bruit de fond dans le spectre de référence, dite intensité de référence. Ainsi, le spectre de référence $m_{ref}$ est établi à partir d'une distribution centrée sur le spectre de bruit de fond a priori $b_{prior}$, en prenant en compte une intensité de référence $\lambda_{b-ref}$.

De la même façon, chaque canal $b_{test}(k)$ du spectre de bruit de fond mesuré $b_{test}$ (i-e la contribution du bruit de fond dans le spectre mesuré $m_{test}$), suit une loi de Poisson de paramètre $\lambda_{b-test}x_b(k)$ où $\lambda_{b-test}$ est une intensité du bruit de fond dans le spectre mesuré $m_{test}$. $x_b(k)$ est un terme de rang $k$ du vecteur $x_b$ précédemment défini. Ainsi, le spectre du bruit de fond mesuré $b_{test}$ est établi à partir d'une distribution centrée sur le spectre de bruit de fond a priori $b_{prior}$, en prenant en compte l'intensité $\lambda_{b-test}$.

Un aspect notable de l'invention est que les intensités $\lambda_{b-ref}$ et $\lambda_{b-test}$ sont distribuées selon une loi bivariée, par exemple une loi gamma bivariée, ou loi de Kibble, de telle sorte que :

$$\lambda_{b-ref}, \lambda_{b-test} \sim Kibble(a_b, b_b, \rho) \quad (2)$$

où :

- $a_b > 0$, $a_b$ étant un premier paramètre, par exemple égal à $\frac{1}{2}$ ;

- $b_b > 0$, $b_b$ étant un deuxième paramètre, par exemple égal à $\frac{1}{2\overline{\lambda}_{b-prior}}$, où $\overline{\lambda}_{b-prior}$ est l'intensité moyenne du bruit de fond a priori ;
- $\rho$ est un coefficient de corrélation de Pearson exprimant une corrélation entre $\lambda_{b-ref}$ et $\lambda_{b-test}$ ;
- $\sim$ désigne l'opérateur «distribué selon ».

Le paramètre de corrélation $\rho$ est ajustable par l'utilisateur. Il s'agit d'un réel compris entre 0 et 1, qui permet de régler le niveau de corrélation a priori entre les intensités du bruit de fond radiologique entre la période de référence $T_{ref}$ et la période de mesure $T_{test}$. Lorsque $\rho = 0$, les intensités du bruit de fond lors de la période de référence et la période de mesure ne sont pas corrélées : les variables $\lambda_{b-ref}$ et $\lambda_{b-test}$ sont des variables gamma indépendantes. Lorsque $\rho \to 1$, $\lambda_{b-test} \simeq \lambda_{b-ref}$. Ainsi, le réglage de $\rho$ dépend de l'appréciation a priori de l'utilisateur quant au degré de stationnarité du bruit de fond radiologique.

L'expression (1) peut être explicitée par

$$f_{Kibble}\left(\lambda_{b-ref},\lambda_{b-test}\right) = \frac{b_b{}^{2a_b}e^{-\frac{b_b(\lambda_{b-ref}+\lambda_{b-test})}{1-\rho}}}{\Gamma(a_b)(1-\rho)^{a_b}} \sum_{i=0}^{\infty} \frac{\left(\lambda_{b-ref}\lambda_{b-test}\right)^{a_b+i-1}}{i!\,\Gamma(a_b+i)} \rho^i \left(\frac{b_b}{1-\rho}\right)^{2i} \quad (3)$$

où $\Gamma$ désigne la loi gamma.

Le coefficient de corrélation $\rho$ est tel que :

$$\rho = \frac{\mathbb{E}\left(\lambda_{b-ref}\lambda_{b-test}\right) - \overline{\lambda}_{b-ref}\overline{\lambda}_{b-test}}{\sigma_{\lambda_{b-ref}}\sigma_{\lambda_{b-test}}} \quad (4)$$

- $\overline{\lambda}_{b-ref}$ et $\sigma_{\lambda_{b-ref}}$ sont la valeur moyenne et l'écart type de $\lambda_{b-ref}$ ;
- $\overline{\lambda}_{b-test}$ et $\sigma_{\lambda_{b-test}}$ sont la valeur moyenne et l'écart type de $\lambda_{b-test}$ ;
- $\mathbb{E}$ est l'opérateur espérance.

De même que $m_{ref}$ et $b_{test}$, le spectre $s_{test}$, qui correspond au comptage dû à l'isotope, dans $m_{ref}$ suit une loi de Poisson de paramètre $\lambda_s x_s(k)$ où $\lambda_s$ est une intensité du signal isotopique $s_{test}$ dans le spectre mesuré $m_{test}$. $x_s(k)$ est un terme de rang $k$ obtenu à partir d'un vecteur $x_s$, ce dernier suivant une loi de Dirichlet dont le vecteur de paramètres est $Kv_s s'$, où :

- $K$ correspond au nombre de canaux du spectre mesuré (qui est égal au nombre de canaux du spectre de référence) ;
- $v_s$ est un facteur de confiance assigné au spectre isotopique a priori $s_{prior}$. $v_s$ est un réel strictement positif qui quantifie un niveau de confiance que l'on attribue au bruit de fond a priori. Lorsque l'utilisateur présente un niveau de confiance élevé à l'égard du spectre isotopique a priori, $v_s$ peut être égal à $10^2$. $v_s$ est proche de 1 dans le cas contraire.
- $s'_{prior}$ est un spectre isotopique a priori normalisé, obtenu par normalisation du spectre isotopique a priori $s_{prior}$. La normalisation est telle que $\sum_{k=1}^{k=K} s'_{prior}(k) = 1$.

$$\text{On pose } \gamma_s = Kv_s s'_{prior} \quad (5)$$

L'intensité du signal $\lambda_s$ suit une loi gamma de paramètres $(a_s, b_s)$, avec :

- $a_s > 0$, $a_s$ étant par exemple égal à $\frac{1}{2}$ ;

- $b_s > 0$, $b_s$ est par exemple égal à $\frac{1}{2\overline{\lambda}_{s-prior}}$, où $\overline{\lambda}_{s-prior}$ est une intensité moyenne du signal correspondant à une valeur d'activité de l'isotope seuil, au-delà de laquelle l'échantillon est considéré comme hors référence.

Ainsi, le spectre $s_{test}$ est établi à partir d'une distribution centrée sur le spectre isotopique a priori $s_{prior}$, en prenant en compte l'intensité $\lambda_s$.

Un élément important de l'invention est de considérer que les comptages multicanaux dans chaque canal de $m_{ref}$ et de $m_{test}$ ne résultent pas directement des spectres a priori (en l'occurrence $b_{prior}$ et $s_{prior}$), car cela constituerait une modélisation trop « rigide », n'autorisant pas suffisamment de variabilité entre les contributions réelles du bruit de fond, et de l'éventuel signal isotopique mesuré, et leurs a priori respectifs.

Etape 130 : calcul du facteur de Bayes.

Le test bayésien consiste à déterminer des probabilités a posteriori de deux hypothèses, selon lesquelles l'échantillon est respectivement dans l'état de référence et hors état de référence :

- sous une hypothèse $H_0$, les spectres $m_{ref}$ et $m_{test}$ ne sont constitués que comptages issus du bruit de fond ;
- sous une hypothèse $H_1$, le spectres $m_{ref}$ n'est constitué que de comptages issus du bruit de fond, et le spectre $m_{test}$ est constitué d'une contribution due au bruit de fond $b_{test}$ et d'une contribution due au signal isotopique $s_{test}$.

Par application du théorème de Bayes,

$$\frac{P(H_0|m_{ref},m_{test})}{P(H_1|m_{ref},m_{test})} = \frac{P(m_{ref},m_{test}|H_0)}{P(m_{ref},m_{test}|H_1)}\frac{P(H_0)}{P(H_1)} \quad (6)$$

Les probabilités a priori $P(H_0)$ **et** $P(H_1)$ sont, dans cet exemple, considérées comme égales.
Par ailleurs,

$$P\big(H_1|\boldsymbol{m_{ref}},\boldsymbol{m_{test}}\big) = 1 - P\big(H_0|\boldsymbol{m_{ref}},\boldsymbol{m_{test}}\big) \quad (7)$$

Donc

$$P\big(H_0|m_{ref},m_{test}\big) = \frac{1}{1+\kappa_{BKD}} \quad (8)$$

$\kappa_{BKD}$ étant un facteur de Bayes, tel que :

$$\kappa_{BKD} = \frac{P\big(\boldsymbol{m_{ref}},\boldsymbol{m_{test}}|H_1\big)}{P\big(\boldsymbol{m_{ref}},\boldsymbol{m_{test}}|H_0\big)} \quad (9)$$

Le calcul du facteur de Bayes suppose d'expliciter les probabilités conditionnelles $P(\boldsymbol{m_{ref}},\boldsymbol{m_{test}}|H_0)$ et $P(\boldsymbol{m_{ref}},\boldsymbol{m_{test}}|H_1)$
$P(\boldsymbol{m_{ref}},\boldsymbol{m_{test}}|H_0)$ est obtenue par marginalisations de la loi jointe $P(\boldsymbol{m_{ref}},\boldsymbol{m_{test}},\lambda_{b\text{-}ref},\lambda_{b\text{-}test},\boldsymbol{x_b}|H_0)$, avec

$$P\big(\boldsymbol{m_{ref}},\boldsymbol{m_{test}},\lambda_{b-ref},\lambda_{b-test},\boldsymbol{x_b}|H_0\big)$$

$$= \prod_{k=1}^{K}\frac{\big(\lambda_{b-ref}x_b(k)T_{ref}\big)^{m_{ref}(k)}}{m_{ref}(k)!}e^{-\lambda_{b-ref}x_b(k)T_{ref}}\frac{\big(\lambda_{b-test}x_b(k)T_{test}\big)^{m_{test}(k)}}{m_{test}(k)!}e^{-\lambda_{b-test}x_b(k)T_{test}}$$

$$\times \frac{\Gamma(K\nu_b)}{\prod_{k=1}^{K}\Gamma\big(\gamma_b(k)\big)}\prod_{k=1}^{K}x_b(k)^{\gamma_b(k)-1}$$

$$\times \frac{b_b^{2a_b}e^{-\frac{b_b(\lambda_{b-ref}+\lambda_{b-test})}{1-\rho}}}{\Gamma(a_b)(1-\rho)^{a_b}}\sum_{i=0}^{\infty}\frac{\big(\lambda_{b-ref}\lambda_{b-test}\big)^{a_b+i-1}}{i!\,\Gamma(a_b+i)}\rho^i\left(\frac{b_b}{1-\rho}\right)^{2i} \quad (10)$$

$\Gamma$ correspond à la loi gamma.
Après marginalisations sur $\lambda_{b\text{-}ref},\lambda_{b\text{-}ref}$ et $\boldsymbol{x_b}$, on peut montrer que

$$P\big(\boldsymbol{m_{ref}},\boldsymbol{m_{test}}|H_0\big)$$

$$= \frac{T_{ref}^{M_{ref}}T_{test}^{M_{test}}}{\prod_{k=1}^{K}m_{ref}(k)!\,m_{test}(k)!}\frac{\Gamma(K\nu_b)}{\Gamma\big(M_{ref}+M_{test}+K\nu_b\big)}\prod_{k=1}^{K}\frac{\Gamma\big(m_{ref}(k)+m_{test}(k)+\gamma_b(k)\big)}{\Gamma\big(\gamma_B(k)\big)}$$

$$\times \left(\frac{b_b^{a_b}}{\Gamma(a_b)}\right)^2\frac{\Gamma\big(a_b+M_{ref}\big)\Gamma\big(a_b+M_{test}\big)}{(1-\rho)^{a_b}\tilde{T}_{ref}^{a_b+M_{ref}}\tilde{T}_{test}^{a_b+M_{test}}}(1$$

$$-z)^{-(a_b+M_{ref}+M_{test})}\times {}_2F_1\big(-M_{ref},-M_{test},a_b,z\big) \quad (11)$$

avec

-

$$M_{ref} = \sum_{k=1}^{K} m_{ref}(k) \,;$$

-

$$M_{test} = \sum_{k=1}^{K} m_{test}(k) \,;$$

-

$$\tilde{T}_{ref} = T_{ref} + \frac{b_b}{1-\rho} \,;$$

-

$$\tilde{T}_{test} = T_{test} + \frac{b_b}{1-\rho} \,;$$

-

$$z = \frac{\rho}{\tilde{T}_{ref}\tilde{T}_{test}} \left(\frac{b_b}{1-\rho}\right)^2 (11') \,;$$

- $_2F_1$ est la fonction hypergéométrique.

$P(m_{test}, m_{ref}|H_1)$ est obtenue par marginalisations de $P(m_{ref}, m_{test}, \lambda_s, x_s, \lambda_{b\text{-}ref}, \lambda_{b\text{-}test}, x_b|H_1)$, avec

$$P\big(m_{ref}, m_{test}, \lambda_s, x_s, \lambda_{b-ref}, \lambda_{b-test}, x_b|H_1\big) = \prod_{k=1}^{K} \frac{\big(\lambda_{b-ref} x_b(k) T_{ref}\big)^{m_{ref}(k)}}{m_{ref}(k)!} e^{-\lambda_{b-ref} x_b(k) T_{ref}}$$

$$\prod_{k=1}^{K} \frac{\big(\big(\lambda_s x_s(k) + \lambda_{b-test} x_b(k)\big) T_{test}\big)^{m_{test}(k)}}{m_{test}(k)!} e^{-\big(\lambda_s x_s(k) + \lambda_{b-test} x_b(k)\big) T_{test}}$$

$$\times \frac{\Gamma(K\nu_b)}{\prod_{k=1}^{K} \Gamma\big(\gamma_b(k)\big)} \prod_{k=1}^{K} x_b(k)^{\gamma_b(k)-1} \frac{\Gamma(K\nu_s)}{\prod_{k=1}^{K} \Gamma\big(\gamma_s(k)\big)} \prod_{k=1}^{K} x_s(k)^{\gamma_s(k)-1}$$

$$\times \frac{b_s{}^{a_s}}{\Gamma(a_s)} \lambda_s{}^{a_s-1} e^{-b_s \lambda_s}$$

$$\times \frac{b_b{}^{2a_b} e^{-\frac{b_b(\lambda_{b-ref}+\lambda_{b-test})}{1-\rho}}}{\Gamma(a_b)(1-\rho)^{a_b}} \sum_{i=0}^{\infty} \frac{(\lambda_{b-ref}\lambda_{b-test})^{a_b+i-1}}{i!\,\Gamma(a_b+i)} \rho^i \left(\frac{b_b}{1-\rho}\right)^{2i} \quad (12)$$

Après marginalisation sur $x_s$ et $x_b$, puis sur $\lambda_s$, et sur , $\lambda_{b\text{-}ref}$ et , $\lambda_{b\text{-}test}$, on peut montrer que :

$$P\left(m_{ref}, m_{test}\middle|H_1\right)$$

$$= \frac{T_{ref}{}^{M_{ref}} T_{test}{}^{M_{test}}}{\prod_{k=1}^{K} m_{ref}(k)!\, m_{test}(k)!} \frac{\Gamma(K\nu_b)}{\prod_{k=1}^{K}\Gamma(\gamma_b(k))} \frac{\Gamma(K\nu_s)}{\prod_{k=1}^{K}\Gamma(\gamma_s(k))} \frac{1}{\Gamma(a_s)} \left(\frac{b_s}{T_{test}+b_s}\right)^{a_s}$$

$$\times \left(\frac{b_b{}^{a_b}}{\Gamma(a_b)}\right)^2 \frac{\Gamma\left(a_b+M_{ref}\right)}{(1-\rho)^{a_b}\tilde{T}_{ref}{}^{a_b+M_{ref}}\tilde{T}_{test}{}^{a_b+M_{test}}} (1-z)^{-\left(a_b+M_{ref}+M_{test}\right)}$$

$$\times \sum_{j=0}^{M_{test}} \frac{w_j\Gamma(j+a_s)\Gamma(M_{test}-j+a_b)\, {}_2F_1\left(-M_{ref},-M_{test}+j,a_b,z\right)\psi^j}{\Gamma(K\nu_s+j)\Gamma\left(K\nu_b+M_{ref}+M_{test}-j\right)} \quad (13)$$

avec

$$\psi = \frac{(1-z)\tilde{T}_{test}}{T_{test}+b_s}$$

L'expression (11) utilise des coefficients $w_j$, ces derniers étant obtenus en formant un ensemble de $K$ vecteurs notés $V_k$, de dimension $(1, M_{test})$. Chaque terme $V_k(j)$ d'un vecteur $V_k$ est tel que :

$$V_k(j) = \binom{m_{test}(k)}{j} \frac{\Gamma(j+\gamma_s(k))}{\Gamma(\gamma_s(k))} \frac{\Gamma\left(m_{ref}(k)+m_{test}(k)-j+\gamma_b(k)\right)}{\Gamma\left(m_{ref}(k)+m_{test}(k)+\gamma_b(k)\right)} \quad (14)$$

On obtient ensuite un vecteur $\Omega$ obtenu par $K$ convolutions discrètes des vecteurs $V_k$, de façon que : $\Omega = V_1 \otimes \dots \otimes V_k \dots \otimes V_K$ (15)

$$\Omega = \left(w_0, \dots w_j, \dots w_{M_{test}}\right) \ (15')$$

Le produit de convolution explicité dans (15) est tel que :

$$(V_m \otimes V_n)(p) = \sum_{p=-\infty}^{+\infty} V_m(p)\, V_n(q-p) \ (16)$$

A partir de (11) et de (13), connaissant (8), on peut expliciter le facteur de Bayes selon l'expression :

$$\kappa_{BKD} = \frac{\Gamma(K\nu_s)}{\prod_{k=1}^{K}\Gamma\left(\gamma_s(k)\right)} \frac{\Gamma\left(M_{ref}+M_{test}+K\nu_b\right)}{\prod_{k=1}^{K}\Gamma\left(m_{ref}(k)+m_{test}(k)+\gamma_b(k)\right)}$$

$$\times \left(\frac{b_s}{T_{test}+b_s}\right)^{a_s} \frac{1}{\Gamma(a_s)\Gamma(a_b+M_{test})\, {}_2F_1\left(-M_{ref},-M_{test},a_b,z\right)}$$

$$\times \sum_{j=0}^{M_{test}} \frac{w_j\Gamma(j+a_s)\Gamma(M_{test}-j+a_b)\, {}_2F_1\left(-M_{ref},-M_{test}+j,a_b,z\right)\psi^j}{\Gamma(K\nu_s+j)\Gamma\left(K\nu_b+M_{ref}+M_{test}-j\right)} \quad (17)$$

Etape 140 : conclusion du test

En fonction de la valeur du facteur de Bayes, une des hypothèses ($H_0$ ou $H_1$) est validée. Pour cela, on calcul l'indicateur de test $\eta$, tel que :

$$\eta = \frac{1}{1 + \kappa_{BKD}} \quad (18)$$

L'indicateur de test $\eta$ est comparé à une valeur seuil $\eta_\alpha$. Lorsque $\eta > \eta_\alpha$, l'hypothèse $H_0$ est rejetée. Sinon, l'hypothèse $H_0$ est acceptée. La valeur seuil $\eta_\alpha$ est calculée en fonction d'un taux de fausse alarme $\alpha$ prédéterminé. La relation entre $\eta_\alpha$ et $\alpha$ est établie numériquement, par une méthode de Monte Carlo.

Dans la description qui précède, on a supposé $\frac{P(H_1)}{P(H_0)} = 1$. Si tel n'est pas le cas, l'expression (17) est multipliée par $\frac{P(H_1)}{P(H_0)}$ pour obtenir le facteur de Bayes.

Dans ce qui précède, les canaux $k$ peuvent décrire toute l'étendue spectrale sur lesquels les spectres $\boldsymbol{m_{ref}}$ et $\boldsymbol{m_{test}}$ sont définis. Cependant, seulement certaines plages des spectres peut suffire à déterminer l'état de l'objet examiné. Il s'agit notamment des régions spectrales d'intérêt situées de part et d'autres des pics correspondant aux énergies d'émission de l'isotope ou des isotopes recherchés. Lors des applications à des fins de contrôle de déclassement ou de contrôle environnemental, le nombre d'isotopes est relativement faible, la plupart des isotopes à vie courte n'ayant plus d'activité significative. De ce fait, les plages spectrales analysées peuvent être limitées aux régions d'intérêt correspondant à chaque isotope susceptible d'être présent. Les spectres $\boldsymbol{m_{ref}}$ et $\boldsymbol{m_{test}}$ sont alors définis par une concaténation de ces régions spectrales. Il s'agit d'un avantage important de ce premier mode de réalisation, qui permet de gagner en temps de calcul.

Comme précédemment évoqué, un paramètre important est le coefficient de corrélation $\rho$, tel que défini dans (4), qui permet de définir a priori une corrélation entre les intensités $\lambda_{b\text{-}ref}$ et $\lambda_{b\text{-}test}$. Le coefficient de corrélation $\rho$ est ajusté par l'utilisateur. Dans le calcul du facteur de Bayes explicité dans (17), $\rho$ est pris en compte dans la variable z, selon l'expression (11').

Lorsque $\rho$ tend vers zéro, z tend également vers 0. En prenant les hypothèses $b_s = b_b$, on a $\psi = 1$. Dans ce cas, le facteur de Bayes est similaire au facteur de Bayes d'une méthode décrite dans la publication [1] citée dans l'art antérieur, la méthode étant désignée par l'acronyme « BRM » (Bayesian Relative Test by Mixture of Multinomial Laws - test bayésien relatif par mélange de lois multinomiales). Selon cette méthode :

- selon l'hypothèse $H_0$, les spectres $\boldsymbol{m_{ref}}$ et $\boldsymbol{m_{test}}$ sont formés de comptages résultant de deux tirages, respectivement à $M_{ref}$ et $M_{test}$ épreuves d'une même loi multinomiale de paramètre vectoriel $\boldsymbol{x_b}$.
- selon l'hypothèse $H_1$, le spectre $\boldsymbol{m_{ref}}$ est formé de comptages issus d'un tirage à $M_{ref}$ épreuves d'une loi multinomiale de paramètre vectoriel $\boldsymbol{x_b}$. Le spectre $\boldsymbol{m_{test}}$ est formé de comptages issus d'un tirage à $M_{test}$ épreuves d'un mélange de deux lois multinomiales paramètres vectoriels respectives $\boldsymbol{x_b}$ et $\boldsymbol{x_s}$.
- Dans le spectre $\boldsymbol{m_{ref}}$, la proportion relative des contributions au mélange de bruit de fond et du signal isotopique est décrite par une variable suivant une loi Bêta.

Lorsque $\rho$ tend vers 1, le facteur de Bayes se rapproche du facteur de Bayes d'une méthode décrite dans la publication [1] citée dans l'art antérieur, la méthode étant désignée par l'acronyme « BAM » (Bayesian Absolute Test by Mixture of Multivariate Poisson Laws - test bayésien absolu par mélange de lois de Poisson multivariées). Selon cette méthode, les intensités $\lambda_{b\text{-}ref}$ et $\lambda_{b\text{-}test}$ suivent une loi gamma monovariée, ce qui implique une stationnarité du bruit de fond.

Les inventeurs ont constaté que le test « BAM » disposait d'une puissance supérieure au test « BRM » si l'hypothèse de stationnarité du bruit de fond était valide. Cependant, le test « BRM » était plus robuste à une non stationnarité du bruit de fond.

En supposant que les intensités $\lambda_{b\text{-}ref}$ et $\lambda_{b\text{-}test}$ suivent une loi gamma bivariée, paramétrée par le facteur de corrélation $\rho$ prédéfini, il est possible de moduler le paramétrage du test, selon que le bruit de fond soit considéré comme stationnaire (auquel cas $\rho$ est choisi proche de 1), ou non stationnaire (auquel cas $\rho$ est choisi proche de 0). Des valeurs intermédiaires de $\rho$, c'est-à-dire comprises entre 0 et 1, permettent de définir un compromis entre la performance du test et le degré de non stationnarité du bruit de fond. Ainsi, et c'est un élément important de l'invention, le test proposé permet un réglage continu, entre les deux valeurs extrêmes de $\rho$, de façon à favoriser l'approche stationnaire du bruit de fond, l'approche non stationnaire, ou une approche de compromis. Cela permet de régler un degré de confiance que l'on souhaite placer dans la stationnarité du bruit de fond entre la définition du bruit de fond a priori, et la période de mesure.

Deuxième mode de réalisation

Dans le premier mode de réalisation, les distributions de probabilité sur lesquelles se basent les définitions de

$m_{ref}$ et $m_{test}$ supposent que les canaux spectraux sont indépendants les uns des autres. En effet, les valeurs des canaux sont distribuées selon une loi de poisson, dont les paramètres sont distribués selon un modèle de Dirichlet. Selon cette approche, les canaux sont considérés comme indépendants. Une telle approche convient à l'utilisation de détecteurs présentant des bonnes performances en terme de résolution en énergie, par exemple des détecteurs de type Germanium refroidis. Avec ce type de détecteur, chaque pic d'émission prend une forme proche d'une distribution de Dirac. L'hypothèse d'indépendance des canaux spectraux est acceptable.

Certains détecteurs présentent des performances moindres en termes de résolution en énergie. Il s'agit par exemple de détecteurs basés sur des matériaux scintillateurs, par exemple Nal, Csl, ou LaBr$_3$. De tels détecteurs sont sensibles, compacts et peu onéreux. Cependant, la résolution spectrale est moindre que celle obtenue avec un détecteur Germanium. De ce fait, l'hypothèse d'indépendance des canaux spectraux n'est plus vérifiée. Le deuxième mode de réalisation de l'invention permet le traitement de spectres dans lesquels une certaine corrélation existe entre les canaux spectraux adjacents.

Selon ce mode de réalisation, schématisé sur la figure 2B, on substitue, au modèle de Dirichlet du précédent mode de réalisation, un a priori de type arbre de Polya. Un arbre de Polya, connu de l'homme du métier, peut être perçu comme une généralisation du processus de Dirichlet. Ainsi, le principe d'un arbre de Polya est de générer une distribution proche du spectre de l'échantillon.

Le mode de réalisation comporte les étapes 200 et 210, qui correspondent respectivement aux étapes 100 et 110 telles que décrites en lien avec le premier mode de réalisation.

Au cours de l'étape 220 de paramétrage du test bayésien, on adopte les hypothèses que celles décrites au cours de l'étape 120, et en particulier le fait que $\lambda_{b\text{-}ref}$ et $\lambda_{b\text{-}test}$ sont distribués selon une loi bivariée, par exemple une loi gamma bivariée de Kibble : cf. expression (2). A la différence du premier mode de réalisation, les vecteurs $x_s$ et $x_b$ sont distribués non pas selon un modèle de Dirichlet, mais selon une distribution de type arbre de Polya. C'est ce qui constitue la principale différence entre le premier et le deuxième mode de réalisation.

Etape 230.

De même que l'étape 130 décrite en lien avec le premier mode de réalisation, l'étape 230 suppose l'établissement des probabilités conditionnelles $P(m_{ref}, m_{test}|H_0)$ et $P(m_{ref}, m_{test}|H_1)$, de façon à calculer un facteur de Bayes.

$P(m_{ref}, m_{test}|H_0)$ est obtenue par marginalisations de la loi jointe $P(m_{ref}, m_{test}, \lambda_{b\text{-}ref}, \lambda_{b\text{-}test}, x_b|H_0)$, avec

$$P\big(\boldsymbol{m_{ref}}, \boldsymbol{m_{test}}, \lambda_{b-ref}, \lambda_{b-test}, \boldsymbol{x_b}\big|H_0\big)$$

$$= \frac{T_{ref}^{M_{ref}} T_{test}^{M_{test}}}{\prod_{k=1}^{K} m_{ref}(k)!\, m_{test}(k)!} e^{\left(-\lambda_{b-ref}T_{ref} - \lambda_{b-test}T_{test}\right)}$$

$$\times f_{Kibble}\big(\lambda_{b-ref}, \lambda_{b-test}\big|a_b, b_b, \rho\big)$$

$$\times \left[\prod_{k=0}^{K-1} \big(\lambda_{b-ref} x_b(k)\big)^{m_{ref}(k)} \big(\lambda_{b-test} x_b(k)\big)^{m_{test}(k)}\right] FPT\big(\boldsymbol{x_b}\big|\boldsymbol{B_{prior}}\big) \quad (19)$$

L'acronyme $FPT$ désigne un arbre de Polya fini (Finite Polya Tree) qui est une distribution de probabilité à valeurs prise sur le simplexe (vecteur positif dont la somme vaut l'unité). La distribution de probabilité $FPT$ est paramétrée par des paramètres. Ces derniers sont désignés par $\boldsymbol{B_{prior}}$ dans le cas du bruit de fond. Les paramètres permettent de définir en particulier la moyenne et la variance de la distribution $FPT$.

On construit les paramètres $\boldsymbol{B_{prior}}$ tel que la moyenne du $FPT(x_b|\boldsymbol{B_{prior}})$ soit égale à la signature du bruit de fond a priori $\boldsymbol{b_{prior}}$. Soit $\sigma$ et $c_0$ des paramètres d'échelle strictement positifs. Plus $\sigma$ est élevée, plus l'arbre de Polya est « rigide » (faible variance). On peut prendre par exemple $\sigma = 2$ et $c_0 = 1$. Les paramètres $\boldsymbol{B_{prior}}$ sont alors construits comme suit : $b_{0,0}$ = 1 ; $b_{L,k} = \boldsymbol{b_{prior}}(k)\, c_0\, (2\sigma)^L$ ; puis récursivement : $b_{l-1,k} = \frac{b_{l,2k} + b_{l,2k+1}}{2\sigma}$ (pour $l = 1, \cdots, L\text{-}1; k = 0, \cdots, 2^{l-1}$). $l$ désigne un numéro de niveaux de l'arbre de Polya.

$l$ est un entier correspondant à chaque niveau de l'arbre de Polya. $L$ correspond à la profondeur (ou nombre de niveaux) de l'arbre de Polya. Selon ce mode de réalisation, le nombre de canaux $K$ est tel que $K = 2^L$.

Les autres notations correspondent aux notations décrites en lien avec le premier mode de réalisation.

Après marginalisation, on obtient :

$$P\left(m_{ref}, m_{test} \middle| H_0\right)$$

$$= \frac{T_{ref}^{M_{ref}} T_{test}^{M_{test}}}{\prod_{k=1}^{K} m_{ref}(k)!\, m_{test}(k)!} \left(\frac{b_b^{a_b}}{\Gamma(a_b)}\right)^2 \frac{\Gamma(a_b + M_{ref})\Gamma(a_b + M_{test})}{(1-\rho)^{a_b} \tilde{T}_{ref}^{a_b + M_{ref}} \tilde{T}_{test}^{a_b + M_{test}}}$$

$$\times (1-z)^{-(a_b + M_{ref} + M_{test})} \,_2F_1\left(-M_{ref}, -M_{test}, a_b, z\right)$$

$$\times \prod_{l=1}^{L} \prod_{k=0}^{2^{l-1}-1} \frac{B(h_{l,2k} + b_{l,2k},\, h_{l,2k+1} + b_{l,2k+1})}{B(b_{l,2k}, b_{l,2k+1})} \quad (20)$$

Les variables notées $h_{l,2k}$ et $h_{l,2k+1}$ sont calculées de la façon suivante : pour tout $k = 0, \cdots, K\text{-}1$, $h_{L,k} = m_{ref}(k) + m_{test}(k)$ puis, récursivement $h_{l\text{-}1,k} = h_{l,2k} + h_{l,2k+1}$ pour $l = 1, \cdots, L\text{-}1;\ k = 0, ..., 2^{l-1}$.

La construction des paramètres fait ainsi intervenir explicitement la moyenne a priori du bruit de fond de la façon suivante :

- $B$ désigne la loi Bêta, connue de l'homme du métier ;
- $L$ correspond aux nombres de niveaux de la distribution : $K = 2^L$ ;
- $b_{l,2k}$ correspond à un paramètre de décomposition des paramètres $\boldsymbol{B_{prior}}$ définissant un *a priori* sur le bruit de fond selon un arbre de Polya.

$P(\boldsymbol{m_{ref}}, \boldsymbol{m_{test}}|H_1)$ est obtenue par marginalisations de $P(\boldsymbol{m_{ref}}, \boldsymbol{m_{test}}, \lambda_s, \boldsymbol{x_s}, \lambda_{b\text{-}ref}, \lambda_{b\text{-}test}, \boldsymbol{x_b}|H_1)$, avec

$$P\left(\boldsymbol{m_{test}}, \boldsymbol{m_{ref}}, \lambda_s, \boldsymbol{x_s}, \lambda_{b-ref}, \lambda_{b-test}, \boldsymbol{x_b} \middle| H_1\right) =$$

$$= \frac{T_{ref}^{M_{ref}} T_{test}^{M_{test}}}{\prod_{k=1}^{K} m_{ref}(k)!\, m_{test}(k)!} \boldsymbol{e}^{-\lambda_{b-ref} T_{ref} - (\lambda_s + \lambda_{b-test}) T_{test}}$$

$$\times \frac{b_s^{a_s}}{\Gamma(a_s)} \lambda_s^{a_s - 1} e^{-b_s \lambda_s} \times f_{Kibble}\left(\lambda_{b-ref}, \lambda_{b-test} \middle| a_b, b_b, \rho\right)$$

$$\times \left[ \prod_{k=0}^{K-1} \left(\lambda_{b-ref} x_b(k)\right)^{m_{ref}(k)} \left(\lambda_s x_s(k) + \lambda_{b-test} x_b(k)\right)^{m_{test}(k)} \right]$$

$$\times FPT\left(\boldsymbol{x_s} \middle| \boldsymbol{S_{prior}}\right) FPT\left(\boldsymbol{x_b} \middle| \boldsymbol{B_{prior}}\right) (21)$$

On construit les paramètres $\boldsymbol{S_{prior}}$ tel que la moyenne du $FPT(\boldsymbol{x_s}|\boldsymbol{S_{prior}})$ soit égale à la signature du signal isotopique a priori $\boldsymbol{s_{prior}}$. Soit $\sigma$ et $c_0$ des paramètres d'échelle strictement positifs. Plus $\sigma$ est élevée, plus l'arbre de Polya est « rigide » (faible variance). On peut prendre par exemple $\sigma = 2$ et $c_0 = 1$. Les paramètres $\boldsymbol{S_{prior}}$ sont alors construits comme suit : $s_{0,0} = 1$ ; $s_{L,k} = \boldsymbol{s_{prior}}(k)\, c_0\, (2\sigma)^L$ ; puis récursivement : $s_{l-1,k} = \frac{s_{l,2k} + s_{l,2k+1}}{2\sigma}$ (pour $l = 1, \cdots, L\text{-}1; k = 0, \cdots, 2^{l-1}$)

Après marginalisation, on obtient :

$$P\left(m_{ref}, m_{test} \middle| H_1\right)$$

$$= \frac{T_{ref}{}^{M_{ref}} T_{test}{}^{M_{test}}}{\prod_{k=1}^{K} m_{ref}(k)! \, m_{test}(k)!}$$

$$\times \left[\prod_{l=1}^{L} \prod_{k=0}^{2^{l-1}-1} \frac{1}{B\left(s_{l,2k}, s_{l,2k+1}\right)} \frac{1}{B\left(b_{l,2k}, b_{l,2k+1}\right)}\right] \frac{1}{\Gamma(a_s)}$$

$$\times \left(\frac{b_s}{T_{test} + b_s}\right)^{a_s} \left(\frac{b_b{}^{a_b}}{\Gamma(a_b)}\right)^2 \frac{\Gamma\left(a_b + M_{ref}\right)}{(1-\rho)^{a_b} \tilde{T}_{ref}{}^{a_b + M_{ref}} \tilde{T}_{test}{}^{a_b + M_{test}}} \, (1$$

$$- z)^{-\left(a_b + M_{ref} + M_{test}\right)}$$

$$\times \sum_{j=0}^{M_{test}} \zeta_j \Gamma(j + a_s) \Gamma(M_{test} - j + a_b) \, {}_2F_1\left(-M_{ref}, -M_{test} + j, a_b, z\right) \psi^j \quad (22)$$

$\zeta_j = C_{0,0,j}$ où $C_{0,0,j}$ est calculé par l'algorithme suivant :

- On pose $\quad C_{L,k,j} = \begin{pmatrix} m_{test(k)} \\ j \end{pmatrix}$

- Puis on calcule récursivement (pour $l = L, \cdots, 1; k = 0, \cdots, 2^{l-1}$)

$$C_{l-1,k,j} = \sum_{\substack{g+d=j \\ g \leq m_{test}(2k) \\ d \leq m_{test}(2k+1)}} C_{l,2k,g} \, C_{l,2k-1,d} \, B\left(g + s_{l,2k}, d + s_{l,2k+1}\right) B\left(h_{l,2k} - g + b_{l,2k}, h_{l,2k+1} - d + b_{l,2k+1}\right)$$

- Jusqu'à obtention de $\zeta_j = C_{0,0,j}$

A partir de (20) et de (22), on peut expliciter le facteur de Bayes selon l'expression :

$$\kappa_{BKPT} = \left[\prod_{l=1}^{L} \prod_{k=0}^{2^{l-1}-1} \frac{1}{B\left(a_{l,2k}, a_{l,2k+1}\right) B\left(h_{l,2k} + b_{l,2k}, h_{l,2k+1} + b_{l,2k+1}\right)}\right]$$

$$\times \left(\frac{b_s}{T_{test} + b_s}\right)^{a_s} \frac{1}{\Gamma(a_s) \Gamma(a_b + M_{test}) \, {}_2F_1\left(-M_{ref}, -M_{test}, a_b, z\right)}$$

$$\times \sum_{j=0}^{M_{test}} \zeta_j \Gamma(j + a_s) \Gamma(M_{test} - j$$

$$+ a_b) \, {}_2F_1\left(-M_{ref}, -M_{test} + j, a_b, z\right) \psi^j \quad (23)$$

Etape 240 : l'étape 240 est effectuée de la même manière que l'étape 140.

Essais expérimentaux.

Les inventeurs ont mis en œuvre la méthode précédemment décrite, selon le premier mode de réalisation, à partir de spectres simulés numériquement. On a mis en œuvre différents types de tests afin d'évaluer la performance de chaque test en terme de taux de détections vraies (vrais positifs) de taux de fausses alarmes (faux positifs). Les spectres étaient simulés en prenant en compte une quantité aléatoire d'Uranium, à différents enrichissements. On s'est basé sur la détection de $^{235}$U. Les durées d'acquisition des spectres simulés étaient de 3000 secondes ou 5000 secondes.
On a comparé le test bayésien décrit en lien avec le premier mode de réalisation, désigné par le terme BKD, en prenant en compte différentes valeurs de $\rho$, avec les tests BAM et BRM. Le fond radiologique a été considéré comme stationnaire ou non stationnaire, aussi bien en forme qu'en intensité.

Les figures 4A et 4B représentent les performances du test en considérant un fond radiologique stationnaire, et un coefficient de corrélation $\rho$ proche de 1, les durées d'acquisition $T_{ref}$ étant respectivement de 3000 secondes et 5000 secondes. Sur ces spectres, la composition isotopique de l'Uranium est considérée comme naturelle, la fraction massique de $^{235}U$ étant de 0.7%. Les performances sont représentées sous la forme de courbes de « ROC » (Receiver Operating Characteristic - caractéristique de fonctionnement du récepteur), représentant l'évolution du taux de détections vraies TDR (True Detection Rate) (axe des ordonnées) en fonction du taux de fausses détections FAR (False Alarm Rate) (axes des abscisses). Dans le cas d'un détecteur idéal, le taux de détection vraies est égal à 1. Sur la figure 4A, on a représenté le cas d'un détecteur idéal en pointillés. Plus la courbe de ROC se rapproche de la courbe correspondant à un détecteur idéal, plus le test est considéré comme performant.

Les figures 4A et 4B montrent que lorsque le bruit de fond est stationnaire et que le bruit de fond, lors de la mesure, est considéré comme corrélé au bruit de fond a priori, les performances du test selon l'invention (BKD) sont proches de l'art antérieur (BAM). Les inventeurs ont fait le même constat en prenant en compte une isotopie différente de l'U, le niveau d'enrichissement étant de 3% (i-e fraction massique de 3% de $^{235}U$). Cf. figures 4C (3000 secondes) et 4D (5000 secondes). Lorsque l'Uranium est enrichi, la quantité de photons émis par $^{235}U$ est supérieure, ce qui induit un meilleur rapport signal sur bruit. Cela explique la meilleure performance des tests comparativement à la configuration selon laquelle l'isotopie est naturelle : cf. comparaison figures 4C et 4A ainsi que 4D et 4B.

Les figures 5A et 5B correspondent à une isotopie naturelle, un bruit de fond stationnaire, et un coefficient de corrélation $\rho$ proche de 0. Dans ce cas, les performances du test selon l'invention (BKD) sont proches des performances du test BRM décrit dans l'art antérieur.

Les figures 6A et 6B correspondent à une isotopie naturelle, le bruit de fond étant non stationnaire en forme et en intensité, avec un coefficient de corrélation de corrélation $\rho$ proche de 1, les durées d'acquisition étant respectivement égales à 3000 s et 5000 s. On observe que le test selon l'invention (BKD) est plus performant que le test BAM de l'art antérieur.

Les figures 7A et 7B correspondent à une isotopie de 3% d'$^{235}U$, le bruit de fond étant non stationnaire en forme et en intensité, avec un coefficient de corrélation de corrélation $\rho$ proche de 0, les durées d'acquisition étant respectivement égales à 3000 s et 5000 s. On observe que le test selon l'invention (BKD) est plus performant que le test BAM de l'art antérieur.

Les figures 8A et 8B correspondent à un bruit de fond non stationnaire en forme et en intensité, avec un coefficient de corrélation intermédiaire, entre 0 et 1, la durée d'acquisition étant égale à 3000 s. Sur la figure 8A, l'isotopie correspond à l'isotopie naturelle. Sur la figure 8B, l'isotopie correspond à une isotopie de 3% d'$^{235}U$. On observe que l'invention permet d'obtenir un résultat intermédiaire entre les tests BAM et BRM de l'art antérieur.

Lorsque les conditions de mesures sont peu favorables, ce qui correspond à des mesures en considérant une isotopie naturelle, les performances du test selon l'invention sont supérieures à celles des tests décrits dans l'art antérieur. On observe également que le test de l'invention permet, par un simple réglage du coefficient de corrélation, de s'adapter à des conditions selon lesquelles le bruit de fond est considéré comme stationnaire ou non stationnaire.

**Revendications**

**1.** Procédé de caractérisation d'un échantillon irradiant, visant à classer l'échantillon dans un état choisi parmi :

- un état de référence, dans lequel l'échantillon présente une composition de référence ;
- un état hors référence, dans lequel l'échantillon comporte un isotope irradiant s'ajoutant à la composition de référence;

le procédé comportant les étapes suivantes :

a) durant une période de mesure, à l'aide d'un détecteur, mesure d'un rayonnement X ou gamma émis par l'échantillon et obtention d'un spectre de l'échantillon ($m_{test}$), défini dans différents canaux d'énergie, correspondant à un spectre du rayonnement détecté par le détecteur, le spectre de l'échantillon :

- comportant un spectre de bruit de fond mesuré ($b_{test}$), correspondant à une composante, dans le spectre de l'échantillon, d'un fond radiologique représentatif de l'état de référence de l'échantillon ;
- pouvant comporter un spectre isotopique ($s_{test}$), correspondant à une composante, dans le spectre de l'échantillon, due à la présence éventuelle de l'isotope dans l'échantillon ;

b) prise en compte

- d'un spectre du bruit de fond a priori ($b_{prior}$),
- d'un spectre isotopique a priori ($s_{prior}$);

c) modélisation d'un spectre de référence ($m_{ref}$), représentatif du spectre détecté par le détecteur lorsque l'échantillon est dans la configuration de référence, le spectre de référence étant établi à partir d'une distribution centrée sur le spectre de bruit de fond a priori ($b_{prior}$), en prenant en compte une intensité de référence du bruit de fond ($\lambda_{b-ref}$);

d) modélisation du spectre du bruit de fond mesuré ($b_{test}$) dans le spectre de l'échantillon ($m_{test}$), à partir d'une distribution centrée sur le spectre de bruit de fond a priori ($b_{prior}$), en prenant en compte une intensité du bruit de fond mesuré ($\lambda_{b-test}$);

e) modélisation du spectre isotopique mesuré ($s_{test}$), à partir d'une distribution centrée sur le spectre isotopique a priori ($s_{prior}$), en prenant en compte une intensité d'émission de l'isotope dans l'échantillon ($\lambda_s$);

f) à partir du spectre de l'échantillon, mesuré lors de l'étape a), et des modélisations résultant des étapes c), d) et e), réalisation d'un test bayésien de façon à estimer :

- une probabilité de l'état de référence de l'échantillon $P(H_0|m_{ref},m_{test})$;
- et/ou une probabilité de l'état hors référence de l'échantillon $P(H_1|m_{ref},m_{test})$;

le procédé étant **caractérisé en ce que** l'intensité du bruit de fond mesuré ($\lambda_{b-test}$) et l'intensité de référence ($\lambda_{b-ref}$) sont distribuées selon une loi bivariée.

2. Procédé selon la revendication 1, dans lequel la loi bivariée est une loi gamma bivariée de Kibble (*Kibble*($a_b,b_b,\rho$)), paramétrée par :

- un premier paramètre ($a_b$) ;
- un deuxième paramètre ($b_b$) ;
- un coefficient de corrélation ($\rho$), traduisant une corrélation a priori entre l'intensité de référence et l'intensité du bruit de fond mesuré.

3. Procédé selon la revendication 2, dans lequel le coefficient de corrélation est réglable par un utilisateur.

4. Procédé selon la revendication 3 ou la revendication 2, dans lequel :

- le premier paramètre ($a_b$) est compris entre 0.4 et 0.6 ;
- le deuxième paramètre ($b_b$) est l'inverse de deux fois une intensité moyenne du bruit de fond a priori ($\overline{\lambda}_{b-prior}$).

5. Procédé selon l'une quelconque des revendications précédentes, dans lequel

- lors de l'étape c), la valeur de chaque canal d'énergie du spectre de référence suit une loi de Poisson de paramètre $\lambda_{b-ref}x_b(k)$, où :

   • $\lambda_{b-ref}$ est l'intensité de référence;
   • $k$ est un rang assigné à chaque canal d'énergie ;
   • $x_b$ est un vecteur, défini sur chaque canal d'énergie, à partir de la distribution centrée sur le spectre du bruit de fond a priori ($b_{prior}$);

- lors de l'étape d), la valeur de chaque canal d'énergie du spectre de bruit de fond mesuré suit une loi de Poisson de paramètre $\lambda_{b-test}x_b(k)$, où :

   • $\lambda_{b-test}$ est l'intensité du bruit de fond mesuré ;
   • $x_b$ est le vecteur défini sur chaque canal d'énergie, à partir de la distribution centrée sur le spectre du bruit de fond a priori ($b_{prior}$), pris en compte pour modéliser le spectre de référence ;

- lors de l'étape e),la valeur de chaque canal d'énergie du spectre isotopique mesuré suit une loi de Poisson de paramètre $\lambda_s x_s(k)$, où :

   • $\lambda_s$ est l'intensité d'émission de l'isotope ;
   • $x_s$ est un vecteur défini sur chaque canal d'énergie, à partir d'une distribution centrée sur le spectre

isotopique a priori ($s_{prior}$).

6.  Procédé selon la revendication 5, dans lequel :

    - le vecteur $x_b$ suit une loi de Dirichlet dont le vecteur de paramètres est défini à partir du bruit de fond a priori ($b_{prior}$);
    - le vecteur $x_s$ suit une loi de Dirichlet dont le vecteur de paramètres est défini à partir du spectre isotopique a priori ($s_{prior}$).

7.  Procédé selon la revendication 5, dans lequel :

    - le vecteur $x_b$ est distribué selon un arbre de Polya, dont le vecteur de paramètres est défini à partir du bruit de fond a priori ($b_{prior}$);
    - le vecteur $x_s$ est distribué selon un arbre de Polya, dont le vecteur de paramètres est défini à partir du spectre isotopique a priori ($s_{prior}$).

8.  Procédé selon l'une quelconque des revendications précédentes, dans lequel :

    - l'échantillon est un objet potentiellement contaminé par l'isotope ;
    - l'état de référence correspond à une absence de contamination de l'échantillon par l'isotope ;
    - l'état hors référence correspond une présence de l'isotope dans l'échantillon.

9.  Procédé selon l'une quelconque des revendications 1 à 8, dans lequel :

    - l'échantillon est un déchet ou un matériau nucléaire ;
    - l'état de référence correspond à un état radiologique considéré comme normal de l'objet ;
    - l'état hors référence correspond à une présence de l'isotope dans l'échantillon au-delà d'un seuil.

10. Dispositif d'analyse spectrométrique d'un échantillon, comportant :

    - un détecteur (10), configuré pour détecter un rayonnement X ou gamma émis par l'échantillon ;
    - un circuit de spectrométrie (12), configuré pour générer un spectre en énergie du rayonnement détecté par le détecteur ; ledit dispositif étant **caractérisé en ce qu'**il comporte également :

        - une unité de traitement (16), programmée pour mettre en œuvre les étapes b) à f) d'un procédé selon l'une quelconque des revendications précédentes à partir du spectre en énergie du rayonnement détecté par le détecteur, l'unité de traitement étant programmée de telle sorte que l'intensité du bruit de fond mesuré ($\lambda_{b\text{-}test}$) et l'intensité de référence ($\lambda_{b\text{-}ref}$) soient distribuées selon une loi bivariée..

**Patentansprüche**

1.  Verfahren zur Charakterisierung einer strahlenden Probe, das darauf abzielt, die Probe in einen Zustand einzuordnen, der gewählt ist unter:

    - einem Referenzzustand, in dem die Probe eine Referenzzusammensetzung aufweist;
    - einem Nicht-Referenzzustand, in dem die Probe ein strahlendes Isotop umfasst, das zu der Referenzzusammensetzung hinzukommt;
    wobei das Verfahren die folgenden Schritte umfasst:

        a) während einer Messperiode, mithilfe eines Detektors, Messen einer von der Probe emittierten Röntgenoder Gammastrahlung und Erhalten eines Spektrums der Probe ($m_{test}$), das in verschiedenen Energiekanälen definiert ist, entsprechend einem Spektrum der von dem Detektor detektierten Strahlung, wobei das Spektrum der Probe:

            - ein gemessenes Hintergrundrauschspektrum ($b_{test}$) umfasst, das einer Komponente, in dem Spektrum der Probe, eines radiologischen Hintergrunds entspricht, der für den Referenzzustand der Probe repräsentativ ist;

- ein Isotopenspektrum ($s_{test}$) umfassen kann, das einer Komponente, in dem Spektrum der Probe, entspricht, die durch das etwaige Vorhandensein des Isotops in der Probe bedingt ist;

b) Berücksichtigen

- eines Spektrums des A-priori-Hintergrundrauschens ($b_{prior}$),
- eines A-priori-Isotopenspektrums ($s_{prior}$);

c) Modellieren eines Referenzspektrums ($m_{ref}$), das für das Spektrum repräsentativ ist, das von dem Detektor detektiert wird, wenn die Probe in der Referenzkonfiguration ist, wobei das Referenzspektrum ausgehend von einer auf das Spektrum des A-priori-Hintergrundrauschens ($b_{prior}$) zentrierten Verteilung erstellt wird, wobei eine Referenzintensität des Hintergrundrauschens ($\lambda_{b-ref}$) berücksichtigt wird;
d) Modellieren des Spektrums des gemessenen Hintergrundrauschens ($b_{test}$) in dem Spektrum der Probe ($m_{test}$) ausgehend von einer auf das Spektrum des A-priori-Hintergrundrauschens ($b_{prior}$) zentrierten Verteilung, wobei eine Intensität des gemessenen Hintergrundrauschens ($\lambda_{b-test}$) berücksichtigt wird;
e) Modellieren des gemessenen Isotopenspektrums ($s_{test}$) ausgehend von einer auf das A-priori-Isotopenspektrum ($s_{prior}$) zentrierten Verteilung, wobei eine Emissionsintensität des Isotops in der Probe ($\lambda_s$) berücksichtigt wird;
f) ausgehend von dem beim Schritt a) gemessenen Spektrum der Probe und von den aus den Schritten c), d) und e) resultierenden Modellierungen, Durchführen eines bayesschen Tests, so dass geschätzt wird:

- eine Wahrscheinlichkeit des Referenzzustands der Probe $P(H_0|m_{ref}, m_{test})$;
- und/oder eine Wahrscheinlichkeit des Nicht-Referenzzustands der Probe $P(H_1|m_{ref}, m_{test})$;

wobei das Verfahren **dadurch gekennzeichnet ist, dass** die Intensität des gemessenen Hintergrundrauschens ($\lambda_{b-test}$) und die Referenzintensität ($\lambda_{b-ref}$) gemäß einem bivariaten Gesetz verteilt sind.

2. Verfahren nach Anspruch 1, wobei das bivariate Gesetz ein bivariates Kibble-Gamma-Gesetz (*Kibble*($a_b, b_b, \rho$)) ist, das parametriert ist durch:

- einen ersten Parameter ($a_b$);
- einen zweiten Parameter ($b_b$);
- einen Korrelationskoeffizienten ($\rho$), der eine A-priori-Korrelation zwischen der Referenzintensität und der Intensität des gemessenen Hintergrundrauschens ausdrückt.

3. Verfahren nach Anspruch 2, wobei der Korrelationskoeffizient von einem Benutzer einstellbar ist.

4. Verfahren nach Anspruch 3 oder Anspruch 2, wobei:

- der erste Parameter ($a_b$) zwischen 0,4 und 0,6 beträgt;
- der zweite Parameter ($b_b$) der Kehrwert des Zweifachen einer mittleren Intensität des A-priori-Hintergrundrauschens ($\overline{\lambda}_{b-prior}$) ist.

5. Verfahren nach einem der vorhergehenden Ansprüche, wobei:

- beim Schritt c) der Wert jedes Energiekanals des Referenzspektrums einem poissonschen Gesetz mit dem Parameter $\lambda_{b-ref}x_b(k)$ folgt, worin:

• $\lambda_{b-ref}$ die Referenzintensität ist;
• $k$ ein jedem Energiekanal zugewiesener Rang ist;
• $x_b$ ein Vektor ist, der über jeden Energiekanal ausgehend von der auf das Spektrum des A-priori-Hintergrundrauschens ($b_{prior}$) zentrierten Verteilung definiert ist;

- beim Schritt d) der Wert jedes Energiekanals des gemessenen Hintergrundrauschspektrums einem poissonschen Gesetz mit dem Parameter $\lambda_{b-test}x_b(k)$ folgt, worin:

• $\lambda_{b-test}$ die Intensität des gemessenen Hintergrundrauschens ist;
• $x_b$ der Vektor ist, der über jeden Energiekanal ausgehend von der auf das Spektrum des A-priori-Hinter-

grundrauschens ($b_{prior}$) zentrierten Verteilung definiert ist und zum Modellieren des Referenzspektrums berücksichtigt wird;

- beim Schritt e) der Wert jedes Energiekanals des gemessenen Isotopenspektrums einem poissonschen Gesetz mit dem Parameter $\lambda_s x_s(k)$ folgt, worin:

• $\lambda_s$ die Emissionsintensität des Isotops ist;
• $x_s$ ein Vektor ist, der über jeden Energiekanal ausgehend von der auf das A-priori-Isotopenspektrum ($s_{prior}$) zentrierten Verteilung definiert ist;

6. Verfahren nach Anspruch 5, wobei:

- der Vektor $x_b$ einem Dirichlet-Gesetz folgt, dessen Parametervektor ausgehend von dem A-priori-Hintergrundrauschen ($b_{prior}$) definiert ist;
- der Vektor $x_s$ einem Dirichlet-Gesetz folgt, dessen Parametervektor ausgehend von dem A-priori-Isotopenspektrum ($s_{prior}$) definiert ist.

7. Verfahren nach Anspruch 5, wobei:

- der Vektor $x_b$ gemäß einem Polya-Baum verteilt ist, dessen Parametervektor ausgehend von dem A-priori-Hintergrundrauschen ($b_{prior}$) definiert ist;
- der Vektor $x_s$ gemäß einem Polya-Baum verteilt ist, dessen Parametervektor ausgehend von dem A-priori-Isotopenspektrum ($s_{prior}$) definiert ist.

8. Verfahren nach einem der vorhergehenden Ansprüche, wobei:

- die Probe ein potentiell durch das Isotop kontaminiertes Objekt ist;
- der Referenzzustand einem Nichtvorhandensein einer Kontamination der Probe durch das Isotop entspricht;
- der Nicht-Referenzzustand einem Vorhandensein des Isotops in der Probe entspricht.

9. Verfahren nach einem der Ansprüche 1 bis 8, wobei:

- die Probe ein nuklearer Abfall oder ein nukleares Material ist;
- der Referenzzustand einem als normal betrachteten radiologischen Zustand des Objekts entspricht;
- der Nicht-Referenzzustand einem Vorhandensein des Isotops in der Probe über einen Schwellenwert hinaus entspricht.

10. Vorrichtung zur spektrometrischen Analyse einer Probe, umfassend:

- einen Detektor (10), der dazu ausgestaltet ist, eine von der Probe emittierte Röntgen- oder Gammastrahlung zu detektieren;
- eine Spektrometrieschaltung (12), die dazu ausgestaltet ist, ein Energiespektrum der von dem Detektor detektierten Strahlung zu erzeugen; wobei die Vorrichtung **dadurch gekennzeichnet ist, dass** sie auch umfasst:

- eine Verarbeitungseinheit (16), die dazu programmiert ist, die Schritte b) bis f) eines Verfahrens nach einem der vorhergehenden Ansprüche ausgehend von dem von dem Detektor detektierten Energiespektrum der Strahlung umzusetzen, wobei die Verarbeitungseinheit so programmiert ist, dass die Intensität des gemessenen Hintergrundrauschens ($\lambda_{b\text{-}test}$) und die Referenzintensität ($\lambda_{b\text{-}ref}$) gemäß einem bivariaten Gesetz verteilt sind.

**Claims**

1. A method of characterising an irradiated sample, so as to classify the sample in a state selected from :

- a reference state, in which the sample has a reference composition;
- a non-reference state, in which the sample contains an irradiating isotope added to the reference composition;

the process comprising the following steps:

a) during a measurement period, using a detector, measurement of X or gamma radiation emitted by the sample and obtaining a spectrum of the sample ($m_{test}$), defined in different energy channels, corresponding to a spectrum of the radiation detected by the detector, the spectrum of the sample:

- comprising a measured background spectrum ($b_{test}$), corresponding to a component, in the spectrum of the sample, of a radiological background representative of the reference state of the sample;
- which may include an isotopic spectrum ($s_{test}$), corresponding to a component, in the spectrum of the sample, due to the possible presence of the isotope in the sample;

b) taking into account :

- an a priori background spectrum ($b_{prior}$),
- an a priori isotopic spectrum ($s_{prior}$);

c) modelling of a reference spectrum ($m_{ref}$), representative of the spectrum detected by the detector when the sample is in the reference configuration, the reference spectrum being established from a distribution centred on the a priori background spectrum ($b_{prior}$), taking into account a reference intensity of the background ($\lambda_{b-ref}$);

d) modelling of the spectrum of the measured background spectrum ($b_{test}$) in the spectrum of the sample ($m_{test}$), from a distribution centred on the a priori background spectrum ($b_{prior}$), taking into account an intensity of the measured background ($\lambda_{b-test}$);

e) modelling of the measured isotopic spectrum ($s_{test}$), from a distribution centred on the a priori isotopic spectrum ($s_{prior}$), taking into account an emission intensity of the isotope in the sample ($\lambda_s$);

f) on the basis of the spectrum of the sample, measured in step a), and the models resulting from steps c), d) and e), performing a Bayesian test so as to estimate :

- a probability of the reference state of the sample $P(H_0|m_{ref}, m_{test})$;
- and/or a probability of the out-of-reference state of the sample $P(H_1|m_{ref}, m_{test})$;

the method being **characterised in that** the intensity of the measured background ($\lambda_{b-test}$) and the reference intensity ($\lambda_{b-ref}$) are distributed according to a bivariate distribution.

2. Method according to claim 1, wherein the bivariate distribution is a bivariate Kibble gamma distribution ($Kibble(a_b, b_b, p)$), parameterised by :

- a first parameter ($a_b$);
- a second parameter ($b_b$);
- a correlation coefficient ($\rho$), reflecting an a priori correlation between the reference intensity and the intensity of the measured background.

3. Method according to claim 2 wherein the correlation coefficient is adjustable by a user.

4. Method according to claim 3 or claim 2, wherein :

- the first parameter ($a_b$) is between 0.4 and 0.6 ;
- the second parameter ($b_b$) is the inverse of twice the average intensity of the a priori background ($\overline{\lambda}_{b-prior}$).

5. Method according to any one of the preceding claims, wherein

- in step c), the value of each energy channel of the reference spectrum follows a Poisson distribution with parameter $\lambda_{b-ref}x_b(k)$, where :

• $\lambda_{b-ref}$ is the reference intensity;
• $k$ is a rank assigned to each energy channel ;
• $x_b$ is a vector, defined on each energy channel, from the distribution centred on the a priori background spectrum ($b_{prior}$);

- in step d), the value of each energy channel of the measured background spectrum follows a Poisson distribution with parameter $\lambda_{b\text{-}test}x_b(k)$, where :

  • $\lambda_{b\text{-}test}$ is the intensity of the measured background ;
  • $x_b$ is the vector defined on each energy channel, from the distribution centred on the a priori background spectrum ($\boldsymbol{b_{prior}}$), used to model the reference spectrum;

- in step e), the value of each energy channel of the measured isotopic spectrum follows a Poisson distribution with parameter $\lambda_s x_s(k)$, where :

  • $\lambda_s$ is the emission intensity of the isotope ;
  • $x_s$ is a vector defined for each energy channel, based on a distribution centred on the a priori isotopic spectrum ($\boldsymbol{s_{prior}}$).

6. Method according to claim 5, wherein :

- the vector $\boldsymbol{x_b}$ follows a Dirichlet distribution whose parameter vector is defined on the basis of the a priori background ($\boldsymbol{b_{prior}}$);
- the vector $\boldsymbol{x_s}$ follows a Dirichlet distribution whose parameter vector is defined on the basis of the a priori isotopic spectrum ($\boldsymbol{s_{prior}}$).

7. Method according to claim 5, wherein :

- the vector $\boldsymbol{x_b}$ is distributed according to a Polya tree, whose parameter vector is defined on the basis of the a priori background ($\boldsymbol{b_{prior}}$);
- the vector $\boldsymbol{x_s}$ is distributed according to a Polya tree, whose parameter vector is defined on the basis of the a priori isotopic spectrum ($\boldsymbol{s_{prior}}$).

8. Method according to any one of the preceding claims, wherein :

- the sample is an object potentially contaminated by the isotope ;
- the reference state corresponds to an absence of contamination of the sample by the isotope;
- The non-reference state corresponds to the presence of the isotope in the sample.

9. Method according to any one of claims 1 to 8, wherein :

- the sample is nuclear waste or material;
- the reference state corresponds to a radiological state considered to be normal for the object;
- the non-reference state corresponds to the presence of the isotope in the sample above a threshold.

10. Device for the spectrometric analysis of a sample, comprising :

- a detector (10) configured to detect X-ray or gamma radiation emitted by the sample;
- a spectrometry circuit (12) configured to generate an energy spectrum of the radiation detected by the detector; wherein the device is **characterized in that** it also comprises
- a processing unit (16), programmed to implement steps b) to f) of a method according to any one of the preceding claims on the basis of the energy spectrum of the radiation detected by the detector, the processing unit being programmed in such a way that the intensity of the measured background ($\lambda_{b\text{-}test}$) and the reference intensity ($\lambda_{b\text{-}ref}$) are distributed according to a bivariate distribution.

**Fig. 1**

**Fig. 2A**

**Fig. 2B**

**Fig. 3**

**Fig. 4A**

**Fig. 4B**

Fig. 4C

Fig. 4D

**Fig. 5A**

**Fig. 5B**

Fig. 6A

Fig. 6B

Fig. 7A

Fig. 7B

Fig. 8A

Fig. 8B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ARAHMANE et al.** A reliable absolute and relative Bayesian method for nuclear decommissioning : low level radioactivity detection with gamma-ray spectrometry. *IEEE Transactions on Instrumentation and Measurement*, 2021, vol. 70, 1-18